# FASCICULE DE BREVET EUROPEEN

(11) **EP 2 711 578 B1**
(45) Date de publication et mention de la délivrance du brevet: **17.06.2020**
(21) Numéro de dépôt: 13183171.1
(22) Date de dépôt: 05.09.2013
(51) Int. Cl.: F16D 13/75

(54) **Système d'embrayage équipé d'un dispositif de rattrapage d'usure amélioré**
Kupplungssystem, das mit einer verbesserten Ausgleichsvorrichtung für Kontaktabbrand ausgerüstet ist
Clutch system provided with an improved wear-adjustment device

(30) Priorité: 24.09.2012 FR 1258929
(43) Date de publication de la demande: 26.03.2014
(73) Titulaire: Valeo Embrayages, 80009 Amiens Cedex 2 (FR)
(72) Inventeur: Brailly, Julien, 80300 DERNANCOURT (FR); Melius, Johan, 80080 AMIENS (FR)
(74) Mandataire: Cardon, Nicolas

(56) Documents cités:
- DE-A1-102009 055 895
- DE-A1-102011 100 869
- FR-A1- 2 753 504
- FR-A1- 2 787 846
- FR-A1- 2 847 626

## Description

### DOMAINE TECHNIQUE DE L'INVENTION

L'invention concerne un système d'embrayage pour véhicule automobile équipé d'un dispositif permettant de compenser l'usure des garnitures de friction au fur et à mesure de leur usure, dénommé ci-après dispositif de rattrapage d'usure.

### ÉTAT DE LA TECHNIQUE

De tels systèmes d'embrayages sont bien connus de l'art antérieur et notamment décrits dans les demandes de brevet français FR2922283, FR2847625 et FR2847626 au nom de la demanderesse.

Un tel système d'embrayage comporte un plateau de réaction destiné à être couplé en rotation à un arbre menant, tel qu'un vilebrequin d'un moteur à combustion interne, un disque de friction portant des garnitures de friction et destiné à être couplé en rotation avec un arbre mené, tel qu'un arbre d'entrée de boîte de vitesses, un couvercle fixé sur le plateau de réaction ; un plateau de pression, solidaire en rotation du couvercle, mobile axialement par rapport audit couvercle et un dispositif de transmission de force, tel qu'un diaphragme, commandé par une butée d'embrayage et supporté, d'une part, par rapport au couvercle et, d'autre part, par rapport au plateau de pression, afin de déplacer axialement ledit plateau de pression par rapport audit couvercle pour serrer le disque de friction entre le plateau de pression et le plateau de réaction, en position embrayée, ou libérer le disque de friction, en position débrayée.

Afin compenser l'usure des garnitures de friction au fur et à mesure de leur usure, le système d'embrayage comporte un dispositif de rattrapage d'usure. Le dispositif de rattrapage d'usure permet de modifier la distance axiale d entre la face de travail du plateau de pression et l'appui par l'intermédiaire duquel l'élément de transmission de force agit sur le plateau de pression.

Le dispositif de rattrapage d'usure comprend des moyens à rampes coopérant avec des moyens à contre-rampes pour modifier ladite distance axiale d. Les moyens à rampe portent une denture engrenant avec une vis sans fin couplée à une roue à rochet coopérant avec un cliquet apte à être déplacé lors de l'actionnement dudit dispositif de transmission de force.

Le cliquet présente la forme générale d'une lamelle élastique, s'étendant le long de la face interne du couvercle et munie d'un trou pour sa fixation au couvercle. Le cliquet présente, à son extrémité libre, une languette de commande s'étendant parallèlement à l'axe de l'embrayage et coopérant élastiquement avec un pied de dent de la roue à rochet. Le dispositif de transmission de force ou diaphragme comporte à sa périphérie externe un appendice radial s'étendant au travers d'un orifice formé dans le cliquet de sorte à coopérer avec la languette de commande. Le cliquet, comporte également, à la faveur d'une découpe en U, une patte élastique de rappel qui s'étend radialement au-delà du pied de la languette de commande, désigné par la référence 39 sur la figure 5 du document FR2847626.

Lors d'une opération d'embrayage, l'appendice radial du dispositif de transmission de force pousse la languette de commande en direction de la roue à rochet. En cas d'usure des garnitures, la languette de commande entraîne la roue à rochet en rotation.

Lors d'une opération de débrayage, l'appendice radial du dispositif de transmission de force s'applique contre la patte élastique de rappel, ce qui fait glisser le cliquet sur les dents de la roue à rochet, jusqu'à déplacer le cliquet jusqu'à une position de butée dans laquelle le cliquet est en appui contre le couvercle.

La patte de rappel du cliquet subit une déformation et des contraintes importantes lors des opérations de débrayage. Aussi, afin d'éviter des endommagements de la patte de rappel qui seraient susceptible d'engendrer une dégradation de la fonction de rattrapage d'usure, les cliquets subissent un traitement particulièrement coûteux de nitruration visant à accroitre la dureté du cliquet. Aussi, la fabrication des cliquets est complexe et onéreuse.

En outre, la course du cliquet entre position embrayée et position de butée étant fonction de la course à la butée d'embrayage, la conception des cliquets selon l'art antérieur prend nécessairement en compte la course de la butée d'embrayage. Or, la course de la butée d'embrayage variant en fonction des différentes références de système d'embrayage, le cliquet est nécessairement spécifique à chacune de ces références et sa conception ne peut être standardisée.

Les solutions de l'art antérieur ne sont donc pas pleinement satisfaisantes.

### OBJET DE L'INVENTION

L'invention vise à remédier à ces problèmes en proposant un système d'embrayage équipé d'un dispositif de rattrapage d'usure qui soit à la fois résistant et facile à fabriquer.

A cet effet, et selon un premier aspect, l'invention propose un système d'embrayage pour véhicule automobile selon la revendication 1.

Ainsi, la patte de rappel des cliquets selon l'art antérieur n'est plus nécessaire pour ramener les cliquets vers leur position de butée. Dès lors les contraintes exercées sur les cliquets sont moins importantes et le traitement coûteux de nitruration, devenu superflu, peut être supprimé.

De plus, la suppression de la patte de rappel entraîne un gain de masse sur le dispositif de rattrapage d'usure qui entraîne, en conséquence, un gain de masse sur l'équilibrage du dispositif de rattrapage d'usure.

En outre, dans la mesure où la course du cliquet peut être dissociée de la course à la butée d'embrayage, la fabrication des cliquets peut être plus facilement standardisée.

Enfin, l'invention permet également de traiter les problèmes dit de « paresse de rattrapage » qui sont dus aux conducteurs qui ne débrayent pas suffisamment pour que le cliquet selon l'art antérieur revienne jusqu'à sa position de butée dans laquelle le cliquet est en appui contre le couvercle. En effet, grâce au rappel élastique du cliquet selon l'invention, le cliquet est apte à revenir dans sa position de butée même lorsque la cours de débrayage n'est que partielle.

Avantageusement, le cliquet est agencé pour fournir une force de rappel supérieur aux forces de frottement résultant du contact entre le cliquet et la roue à rochet. Pour ce faire, le cliquet est avantageusement agencé pour fournir une force de rappel supérieure ou égale à 10 N. De préférence, le cliquet est agencé pour fournir une force de rappel comprise entre 15 et 25 N.

Selon d'autres caractéristiques de l'invention :
- l'orifice de passage de l'appendice radial présente un bord radialement interne de forme arrondie. Cette caractéristique permet répartir au mieux les contraintes dans le cliquet. Ceci est particulièrement avantageux pour éviter une plastification du cliquet, lorsque l'embrayage est en position de transport dans laquelle le cliquet est sollicité vers une position extrême d'embrayage ;
- la partie radialement vers l'extérieur du corps du cliquet et la languette de commande sont au droit d'une ouverture ménagée dans le fond du couvercle ;
- le cliquet comporte, de part et d'autre de la languette de commande, des bras transversaux adaptés à venir en butée contre les bords radiaux de l'ouverture et définissant la position de butée du cliquet.

Selon un deuxième aspect, l'invention concerne un véhicule automobile équipé d'un système d'embrayage selon le premier aspect de l'invention.

### BRÈVE DESCRIPTION DES FIGURES

D'autres objets et avantages de l'invention apparaîtront au cours de la description qui suit, faite en référence aux dessins annexés, dans lesquels :
- la figure 1 est une vue partielle en coupe d'un embrayage équipé d'un dispositif de rattrapage d'usure selon l'invention ;
- la figure 2 est une vue de l'embrayage, partiellement arraché, selon la flèche II de la figure 1 ;

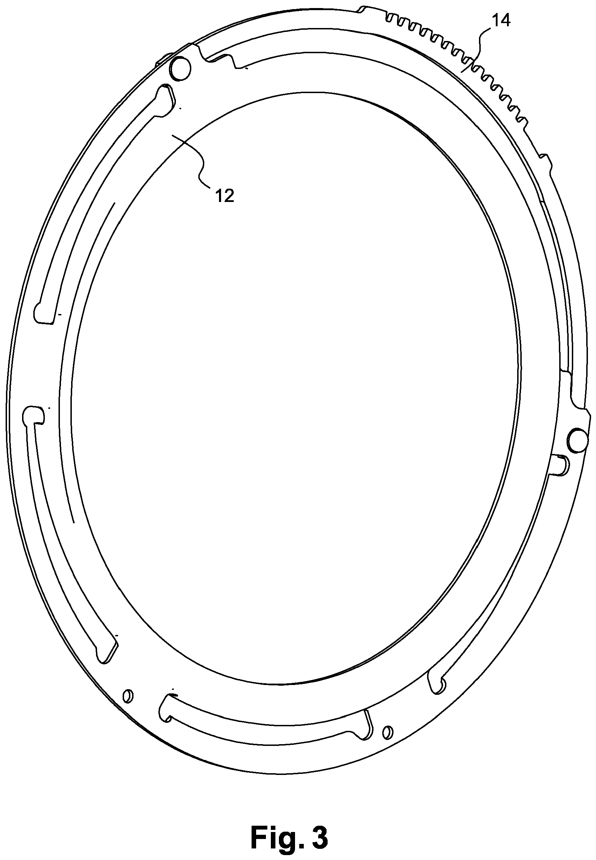

- la figure 3 est une vue de face des moyens à rampe seuls ;
- la figure 4 est une vue en perspective montrant le plateau de réaction, les moyens à rampes, la vis sans fin, la roue à rochet et le ressort hélicoïdal ;

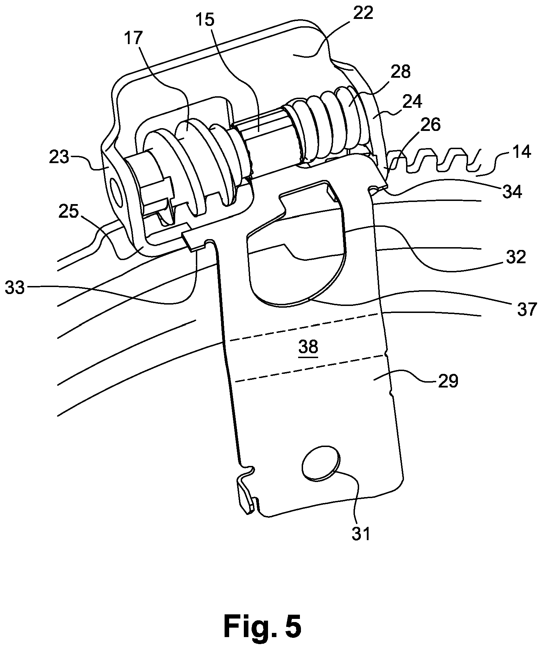

- la figure 5 illustre de manière détaillée le dispositif de rattrapage d'usure selon l'invention ;

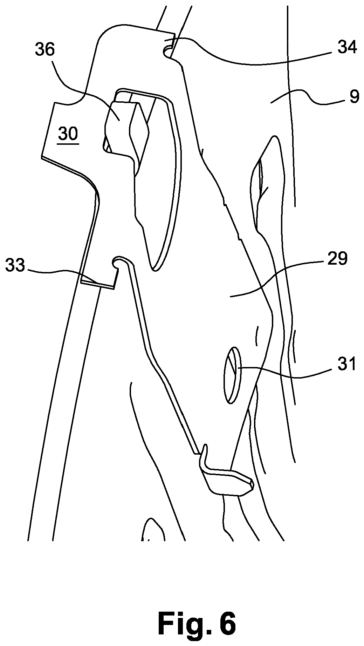

- la figure 6 illustre la coopération entre le dispositif de transmission de force et le cliquet selon l'invention.

### EXEMPLE DE RÉALISATION

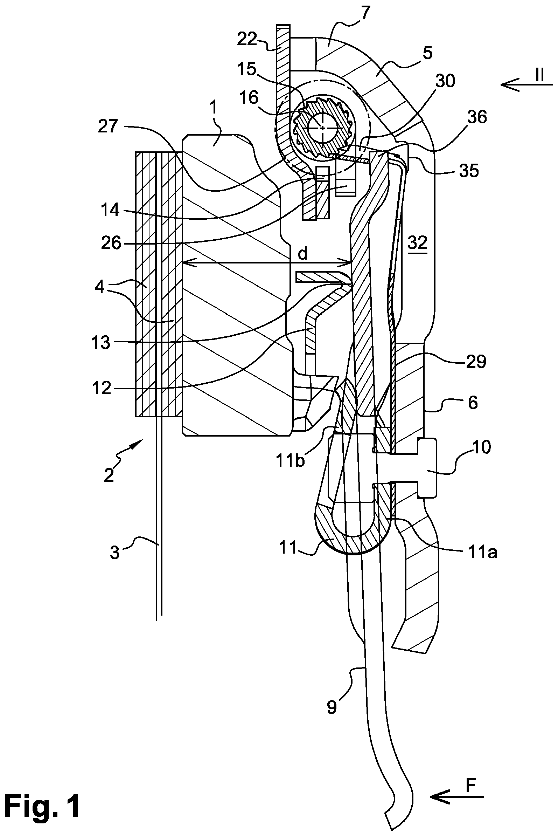

La figure 1 illustre une partie d'un embrayage à friction, notamment pour véhicule automobile, selon l'invention pour la transmission d'un couple entre un arbre menant, tel qu'un vilebrequin d'un moteur à combustion interne, et un arbre mené tel qu'un arbre d'entrée de boîte de vitesse. L'embrayage comporte un plateau de réaction (non représenté), destiné à être couplé en rotation à l'arbre menant et un plateau de pression 1 apte à serrer un disque de friction 2 contre le plateau de réaction.

Le disque de friction 2 est constitué d'un voile 3 portant à sa périphérie externe des garnitures de friction 4 fixées de part et d'autre du voile 3. Ce disque de friction 2 est destiné à être couplé à l'arbre mené par l'intermédiaire d'un moyeu lié au voile 3 à sa périphérie interne.

L'embrayage comporte un couvercle 5, de forme creuse, fixé sur le plateau de réaction. Le couvercle 5 comporte un fond 6, globalement d'orientation transversale, relié par une jupe annulaire 7 à des zones de fixation au plateau de réaction, lesdites zones de fixation étant pourvues d'orifices de passage d'organes de fixation.

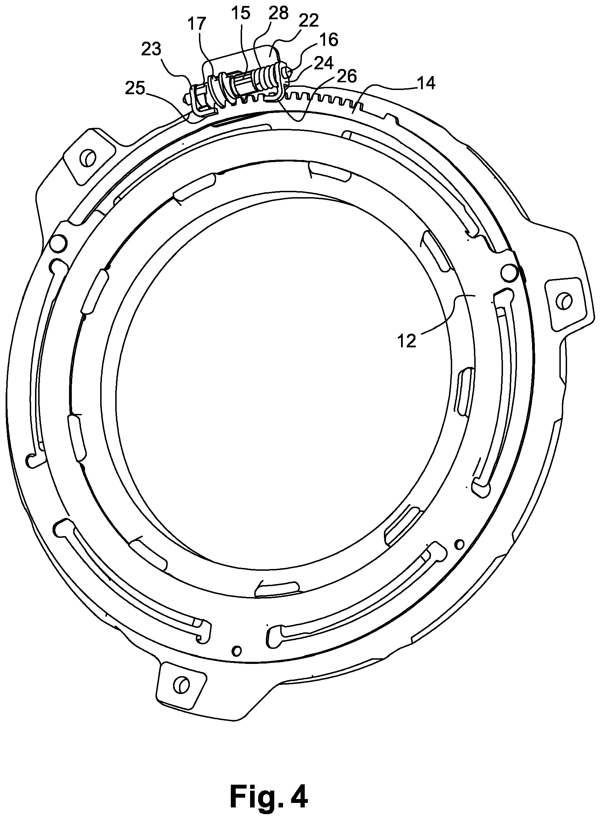

Le plateau de pression 1 est solidaire en rotation du couvercle 5 par l'intermédiaire de languettes tangentielles axialement élastiques, non représentées, qui constituent également des moyens de rappel du plateau de pression 1 vers le couvercle 5. Les languettes tangentielles axialement élastiques sont fixés sur le plateau de pression vie les zones de fixation 8, représentées sur la figure 4. Le plateau de pression 1, tout en étant solidaire en rotation du couvercle 5, est donc déplaçable axialement par rapport au couvercle 5.

Un élément de transmission de force 9 monté pivotant sur le couvercle 5 permet de déplacer axialement le plateau de pression 1 par rapport au couvercle 5 pour serrer le disque de friction 2 entre le plateau de pression 1 et le plateau de réaction lors d'un mouvement d'embrayage ou le libérer lors d'un mouvement de débrayage. Comme cela est connu en soi, le pivotement dudit élément de transmission de force est actionné par une butée, non représentée, exerçant une force sur la périphérie intérieure de l'élément de transmission de force 9.

Dans le cas d'un embrayage de type normalement fermé tel que représenté sur la figure 1, l'élément de transmission de force 9 est un diaphragme comprenant des moyens élastiques, du type rondelle de Belleville, apte à rappeler le plateau de pression vers une position embrayée. Dans le cas d'un embrayage de type normalement ouvert, l'élément de transmission de force 9 peut être un diaphragme comprenant des moyens élastiques, apte à rappeler le plateau de pression vers une position débrayée, voire être formé d'une pluralité de leviers.

Sur la figure 1, le diaphragme 9 est articulé sur le couvercle 6 au moyen de colonnettes 10 s'étendant au travers d'orifices du diaphragme 9 et du couvercle 6. Les colonnettes 10 sont fixées sur le couvercle 6 par sertissage ou analogue et comprennent des têtes qui sont en appui sur le diaphragme par des crochets 11 en forme de C qui s'étendent à travers les orifices du diaphragme et qui comprennent une première branche 11a appliquée sur le couvercle 5 et une seconde branche 11b appliquée sur le diaphragme 9 pour le serrer élastiquement sur le couvercle 5.

L'embrayage représenté sur la figure 1 est du type poussé et représenté en position embrayée. L'opération de débrayage est effectuée en agissant sur l'extrémité des doigts du diaphragme 9 dans le sens de la flèche F.

Pour maintenir le diaphragme 9, lorsque l'embrayage est embrayé, dans une position indépendante de l'usure des garnitures 4 du disque de friction 2 et, dans une moindre mesure, de l'usure des plateaux de pression 11 et de réaction, il est prévu un dispositif de rattrapage automatique d'usure.

Le dispositif de rattrapage d'usure comporte des moyens à rampes constitués d'un anneau 12 présentant des rampes disposées circonférentiellement et tournée vers le plateau de pression. Les moyens à rampes coopèrent avec des moyens à contre-rampes constitués de contre-rampes formées sur la face du plateau de pression 1 tournée vers le fond 6 du couvercle 5.

L'anneau 12 des moyens à rampes est intercalé entre le plateau de pression 1 et le diaphragme 9 et présente sur sa face tournée vers le fond du couvercle une zone d'appui 13 du diaphragme 9. Cette zone d'appui 13 constitue l'appui par l'intermédiaire duquel le diaphragme 9 agit sur le plateau de pression 1. Ainsi, les moyens à rampes et les moyens à contre-rampes sont agencés pour modifier la distance axiale d entre la face de travail du plateau de pression 1 et la zone d'appui 13 du diaphragme 9 par rapport audit plateau de pression 1 de sorte à compenser l'usure de garnitures de friction. Bien entendu, la zone d'appui 13 peut être circonférentiellement continue ou discontinue. Cette zone d'appui 13 est implantée radialement au-dessus de l'articulation du diaphragme 9 par rapport au couvercle 6. Les moyens à rampe portent une denture 14 qui est liée à l'anneau 12.

Le dispositif de rattrapage d'usure comprend, par ailleurs, une roue à rochet 15 à dents inclinées montée tournante autour d'un axe 16 qui porte également une vis sans fin 17. La vis sans fin 17 coopère avec la denture 19. Le filet et le pas de la vis sans fin 17 sont, par conséquent, adaptés à la denture 19.

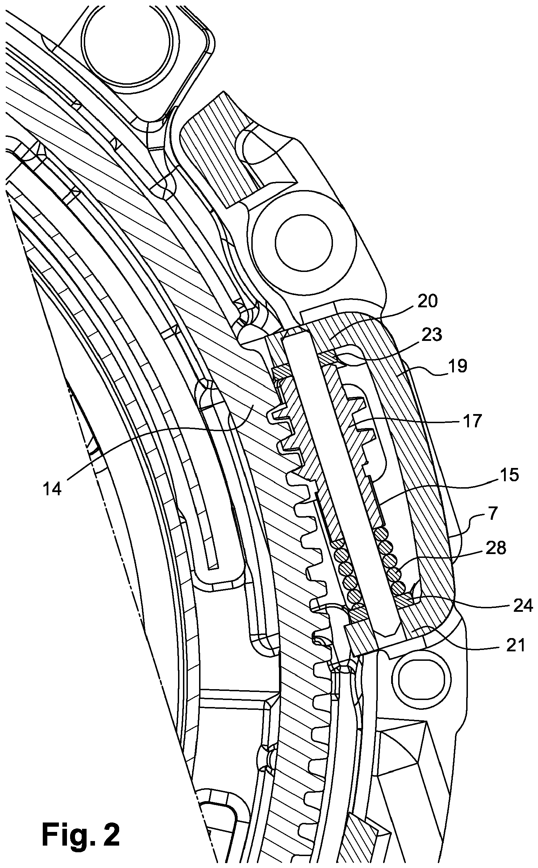

L'axe 16 est porté par le couvercle 5. Pour ce faire, comme représenté sur la figure 2, la jupe annulaire 7 du couvercle 5 présente localement une extension 18 radiale vers l'extérieur à section transversale globalement en forme de U avec une âme 19 et deux ailes 20 et 21 parallèles adaptées à supporter l'axe 16. Les ailes 20 et 21 présentent à cet effet des orifices traversés par l'axe 16.

L'axe 16 est également adapté à supporter une pièce 22 de maintien axial de la denture 14 de sorte que celle-ci soit parfaitement positionnée par rapport à la vis sans fin 16. La pièce 22 de maintien comprend des ailes de support 23, 24 pourvues d'orifice de passage de l'axe 16. La pièce de maintien est également équipée de retours 25, 26 dirigés radialement vers l'intérieur. La denture 14 s'étend axialement entre l'âme 27 de la pièce 22 de maintien et les retours 25, 26 qui définissent une fourche dont les dents calent axialement la denture 14 dans les deux sens.

La vis sans fin 17 et la roue à rochet 15 sont ici formée d'une seule pièce équipée d'un alésage cylindrique axial permettant de la monter sur l'axe 16. Bien entendu, la vis sans fin 17 et la roue à rochet 15 pourraient être des pièces distinctes et agencées de sorte à être solidaires en rotation l'une de l'autre.

Un ressort hélicoïdal de compression 28 constituant un moyen élastique de rattrapage est placé autour de l'axe 16. Le ressort hélicoïdal 28 est ici placé axialement entre la roue à rochet 15 et l'aile 24 de la pièce de maintien 22.

Un cliquet 29 formé d'une lamelle élastique présente, à son extrémité libre, une languette de commande 30 coopérant avec les dents de la roue à rochet 15 de manière à entraîner en rotation la roue à rochet 15 dans un sens de rotation, en cas d'usure, et à empêcher la rotation de la roue à rochet 15 dans le sens de rotation contraire. Le cliquet 29 est formé d'une tôle métallique de faible épaisseur. Le cliquet 29 présente un corps s'étendant le long de la face interne du fond 6 couvercle 5, perpendiculairement à l'axe de l'embrayage et une languette de commande 30 qui s'étend parallèlement à l'axe de l'embrayage. L'extrémité libre de la languette de commande 30 est rétrécie, sa largeur étant globalement adaptée à celle des dents de la roue à rochet 15. Le cliquet 29 est pourvu d'un orifice de fixation 31 permettant le passage d'un organe de fixation, tel qu'un rivet pour sa fixation au couvercle 5. Dans le mode de réalisation représenté, le cliquet 29 est fixé au couvercle au moyen d'une colonnette 10 de fixation de l'articulation du diaphragme 9. Lorsque le cliquet 29 et la roue à rochet 15 sont montés sur le couvercle 5, la languette de commande 30 coopère élastiquement avec un pied de dent de la roue à rochet 15.

Le cliquet 29 comporte dans sa partie radialement vers l'extérieur une ouverture 31 permettant le passage d'un appendice radial 36 formé en périphérie du dispositif de transmission de force ou diaphragme 9 de manière à ce que le diaphragme coopère avec la languette de commande 30 du cliquet. Ainsi, le cliquet 29 étant monté sur le couvercle 5, le mouvement du diaphragme 9 par rapport audit couvercle 5, vers sa position embrayée, pousse la languette de commande 30 en direction de la roue à rochet 15. L'orifice 32 est formée dans la portion coudée entre la languette de commande 30 d'orientation axiale et le corps sensiblement d'orientation radiale du cliquet 29. Le bord interne 37 de l'orifice 32 de passage de l'appendice radial 36 est de forme arrondie, sans angle de sorte à limiter les zones de fortes contraintes.

La partie radialement vers l'extérieur du corps du cliquet 29 et la languette de commande 30 sont au droit d'une ouverture 32 ménagée dans le fond 6 du couvercle 5. Cette ouverture 32, en autorisant le débattement de la partie radialement vers l'extérieur du cliquet 30 lors du mouvement du diaphragme 9 vers le débrayage permet un gain d'encombrement axial.

De part et d'autre de la languette de commande 30 s'étendent transversalement des bras transversaux 33 et 34 adaptes à venir en butée contre les bords 35 de l'ouverture 32. Lesdits bras transversaux 33 et 34 et les bords 35 de l'ouverture 32 coopèrent donc afin de limiter la course de la languette de commande 30 vers le fond 6 du couvercle 5. Ainsi, lors d'un débrayage, le mouvement de la languette de commande 30 s'arrête dans une position de butée dans lequel le cliquet 29 est en appui contre le fond 6 du couvercle.

Selon l'invention, le cliquet 29 est, dans sa position de butée, contraint vers la roue à rochet 15, par le fond 6 du couvercle 5, de sorte à fournir une force contraire de rappel apte à rappeler élastiquement le cliquet 29 vers sa position de butée. Le cliquet 29 présente une zone de pliage 38 permettant de cambrer le cliquet 29 de manière importante. Bien évidement, le cambrage du cliquet 39 avant son montage sur le couvercle est supérieur à son cambrage après montage de telle sorte que le fond 6 du couvercle 5 contraint le cliquet 29 vers la roue à rochet 15.

Le cliquet est agencé pour fournir une force de rappel supérieure ou égale à 10 N. De préférence, le cliquet est agencé pour fournir une force de rappel comprise entre 15 et 25 N.

Ainsi, on comprend que, lors du basculement du diaphragme 9 lors des opérations d'embrayage, celui-ci déplace la languette de commande 30, illustré sur la figure 1 de la droite vers la gauche et, par coopération avec les dents de la roue à rochet 15, l'extrémité de la languette de commande 30 est amenée, en cas d'usure des garnitures 4, à faire tourner la roue à rochet 15 dans le sens horaire. Lors du débrayage, la précontrainte du cliquet 29 et l'inclinaison des dents de la roue à rochet 15 font que la languette de commande 30 monte sur les dents de celle-ci, dans la limite du débattement toléré par la position de butée définie ci-dessus. Dès lors, le cliquet 29 est agencé de manière à ce que le diaphragme 9 pousse la languette de commande 30 en direction de la roue à rochet 15 lors d'un mouvement d'embrayage et à ce que la languette de commande 30 s'éloigne de la roue à rochet 15 jusqu'à une position de butée dans lequel le cliquet 29 est en appui contre le couvercle 5, lors d'une opération de débrayage.

Le dispositif de rattrapage d'usure fonctionne comme suit. La figure 1 représente schématiquement l'embrayage engagé, c'est-à-dire en position embrayée, les garnitures 4 du disque de friction 2 étant à l'état neuf et serrées entre le plateau de réaction et le plateau de pression 1. Dans cette position, l'extrémité libre de la languette de commande 30 du cliquet 29 est en appui sur le pied d'une dent de la roue à rochet 13.

Lorsque l'embrayage est débrayé, l'extrémité des doigts du diaphragme 9 est sollicitée, par la butée d'embrayage, dans le sens de la flèche F, et le diaphragme 9 bascule autour de son articulation sur le couvercle 5 de façon à ce que sa périphérie externe libère progressivement le plateau de pression 1 et que son appendice radial 36 libère la languette de commande 30. Le cliquet 29 est alors rappelé élastiquement vers sa position de butée et l'extrémité de la languette de commande 30 suit la rampe inclinée constituée par la dent dans le pied de laquelle elle se trouvait dans l'étape précédente.

Les dents de la roue à rochet 15 et la position de butée de la languette de commande 30 contre le couvercle 5 sont conçus de sorte que, lors de cette course de débrayage, garnitures neuves, l'extrémité de la languette de commande 36 ne saute pas une dent.

Lorsque les garnitures 4 s'usent, le plateau de pression 1, soumis à l'effort axial du diaphragme 9, se rapproche du plateau de réaction. La périphérie radialement externe du diaphragme 9 se rapproche donc du plateau de réaction, en entraînant dans son mouvement le cliquet 29. La roue à rochet 15 tourne alors autour de son axe 16 dans le sens horaire. Cet entraînement en rotation de la roue à rochet 15 conduit la vis sans fin 17 à tourner également sur l'axe 16.

L'anneau 12 portant les rampes étant immobilisé en rotation sous l'effet de la charge du diaphragme 9, la vis sans fin 17 qui engrène avec la denture 14 se visse sur cette denture 14 en comprimant le ressort hélicoïdal 18.

Lors de l'opération de débrayage qui suit la phase d'usure qui vient d'être décrite, le plateau de pression 1 libère les garnitures 4 en s'éloignant d'elles sous l'action des languettes tangentielles qui le ramènent vers le fond 6 du couvercle 5 ainsi que l'anneau 12 des moyens à rampes. Le ressort hélicoïdal 28 sollicite la vis sans fin 17 vers l'aile 18 de la pièce de maintien 22, dont elle s'est éloignée en phase d'usure, c'est-à-dire de la droite vers la gauche par rapport à la figure 2.

La charge du diaphragme 9 n'étant plus appliquée sur l'anneau 12 des moyens à rampe, le seul effort a vaincre pour pouvoir faire tourner l'anneau 12 des moyens à rampe par rapport au plateau de pression 1 est l'effort de rappel des languettes tangentielles. Si la charge du ressort hélicoïdal 28 est suffisante pour vaincre cet effort, alors le ressort hélicoïdal 28 déplace la vis sans fin 17 de la droite vers la gauche qui est empêchée de tourner sur elle-même par le cliquet 29 et qui entraîne alors en rotation l'anneau 12 des moyens à rampes, par l'intermédiaire de sa denture 14. Les rampes, par coopération avec les contre-rampes, augmentent ainsi la distance axiale entre la face de travail du plateau de pression 1 la zone d'appui 13 par l'intermédiaire de laquelle diaphragme 9 agit sur le plateau de pression 1 et, par conséquent, éloignent le plateau de pression 1 du fond 6 du couvercle 5, rattrapant ainsi au moins en partie l'usure des garnitures 4.

Si l'usure a été suffisante, alors la roue à rochet 15 a tourné suffisamment pour qu'au retour la languette de commande 30, dont la course est limitée, saute une dent. Dans ce cas, lors de l'opération d'embrayage qui suit, la languette de commande 30 fait tourner la roue à rochet 15 et l'anneau 12 des moyens à rampes, non encore serré par le diaphragme 9, tournent et rattrapent l'usure. En fin d'opération de rattrapage, dans la position embrayée, le diaphragme 9, la roue à rochet 15, et la languette de commande 30 retrouvent la position qu'ils occupaient a la figure 1.

Plusieurs opérations d'embrayage et de débrayage peuvent être nécessaires avant que le dispositif de rattrapage de jeu n'entre en phase de rattrapage proprement dite.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Système d'embrayage pour véhicule automobile comportant au moins :
- un plateau de réaction destiné à être couplé en rotation à un arbre menant ;
- un disque de friction (2) portant des garnitures (4) de friction et destiné à être couplé en rotation avec un arbre mené ;
- un couvercle (5) fixé sur le plateau de réaction ;
- un plateau de pression (1), solidaire en rotation du couvercle (5), mobile axialement par rapport audit couvercle (5) et présentant une face de travail en vis-à-vis des garnitures (4) de friction;
- un élément de transmission de force (9) apte à être commandé par une butée d'embrayage et supporté, d'une part, par rapport au couvercle (5) et, d'autre part, par rapport au plateau de pression (1) via un appui (13), afin de déplacer axialement ledit plateau de pression (1) par rapport audit couvercle pour serrer le disque de friction (2) entre le plateau de pression (1) et le plateau de réaction, en position embrayée, ou le libérer, en position débrayée ;
- un dispositif de rattrapage d'usure permettant de modifier la distance axiale d entre la face de travail du plateau de pression (1) et l'appui (13) par l'intermédiaire duquel l'élément de transmission de force (9) agit sur le plateau de pression (1), en fonction de l'usure des garnitures (4) de friction, ledit dispositif de rattrapage d'usure comprenant :
∘ des moyens (12) à rampes coopérant avec des moyens à contre-rampes pour modifier ladite distance axiale d, lesdits moyens à rampe (12) portant une denture (14) ;
∘ une vis sans fin (17) et une roue à rochet (15) équipé de dents couplées en rotation, ladite vis sans fin (17) engrenant avec la denture de sorte à actionner lesdits moyens (12) à rampes ;
∘ un cliquet (29), fixé sur ledit couvercle (5), présentant une languette de commande (30) coopérant avec les dents de la roue à rochet (15) de manière à entraîner en rotation la roue à rochet (15) dans un sens de rotation, en cas d'usure, et à empêcher la rotation de la roue à rochet (15) dans le sens de rotation contraire, ledit cliquet (29) étant agencé de manière à ce que l'élément de transmission de force (9) pousse la languette de commande (30) en direction de la roue à rochet (15) lors d'une opération d'embrayage et à ce que la languette de commande (30) s'éloigne de la roue à rochet (15) jusqu'à une position de butée dans laquelle le cliquet (29) est en appui contre le couvercle (5), lors d'une opération de débrayage,
ledit système d'embrayage étant **caractérisé en ce que** le cliquet (29) est, dans sa position de butée, contraint vers la roue à rochet (15) de sorte à fournir une force contraire de rappel apte à rappeler élastiquement le cliquet (29) vers sa position de butée et **en ce que** le cliquet (29) présente un corps s'étendant radialement le long de la face interne du fond (6) couvercle (5), une languette de commande (30) s'étendant axialement et une portion coudée entre le corps et la languette de commande (30), ladite portion coudée étant pourvue d'un orifice (32) permettant le passage d'un appendice radial (36) formé en périphérie de l'élément de transmission de force (9) de manière à ce que ledit élément de transmission de force (9) coopère avec la languette de commande (30) du cliquet (29).

2. Système d'embrayage selon la revendication 1, **caractérisé en ce que** le cliquet est agencé pour fournir, dans sa position de butée une force de rappel supérieure ou égale à 10 N.

3. Système d'embrayage selon la revendication 1, **caractérisé en ce que** le cliquet est agencé pour fournir, dans sa position de butée, une force de rappel comprise entre 15 et 25 N.

4. Système d'embrayage selon l'une quelconque des revendications 1 à 3, **caractérisé en ce que** l'orifice (32) de passage de l'appendice radial (36) présente un bord radialement interne (37) de forme arrondie.

5. Système d'embrayage selon la revendication 4 ou l'une quelconque des revendications 1 à 3, **caractérisé en ce que** la partie radialement vers l'extérieur du corps du cliquet (29) et la languette de commande (30) sont au droit d'une ouverture (32) ménagée dans le fond (6) du couvercle (5).

6. Système d'embrayage selon la revendication 5, **caractérisé en ce que** le cliquet (209) comporte de part et d'autre de la languette de commande des bras transversaux (33, 34) adaptés à venir en butée contre les bords radiaux (35) de l'ouverture (32) et définissant la position de butée du cliquet (29).

7. Véhicule automobile **caractérisé en ce qu'**il est équipé d'un système d'embrayage selon l'une quelconque des revendications précédentes.

## Patentansprüche

1. Kupplungssystem für ein Kraftfahrzeug, das mindestens beinhaltet:
- eine Gegendruckplatte, die dazu bestimmt ist, mit einer Antriebswelle drehgekoppelt zu werden;
- eine Reibscheibe (2), die Reibbeläge (4) trägt und dazu bestimmt ist, mit einer angetriebenen Welle drehgekoppelt zu werden;
- einen Deckel (5), der an der Gegendruckplatte befestigt ist;
- eine Anpressplatte (1), die drehfest mit dem Deckel (5) verbunden ist, in Bezug auf den Deckel (5) axial beweglich ist und gegenüber den Reibbelägen (4) eine Arbeitsseite aufweist;
- ein Kraftübertragungselement (9), das geeignet ist, von einem Ausrücklager betätigt zu werden, und zum einen in Bezug auf den Deckel (5) und zum anderen in Bezug auf die Anpressplatte (1) über eine Abstützung (13) gehalten wird, um die Anpressplatte (1) axial in Bezug auf den Deckel zu verlagern, um die Reibscheibe (2) in der eingerückten Stellung zwischen der Anpressplatte (1) und der Gegendruckplatte zu klemmen oder sie in der ausgerückten Stellung freizugeben;
- wobei eine Verschleißnachstellvorrichtung es ermöglicht, den axialen Abstand d zwischen der Arbeitsseite der Anpressplatte (1) und der Abstützung (13), über die das Kraftübertragungselement (9) auf die Anpressplatte (1) einwirkt, in Abhängigkeit vom Verschleiß der Reibbeläge (4) zu ändern, wobei die Verschleißnachstellvorrichtung umfasst:
∘ Rampenmittel (12), die mit Gegenrampenmitteln zusammenwirken, um den axialen Abstand d zu ändern, wobei die Rampenmittel (12) eine Zahnung (14) tragen;
∘ eine Schnecke (17) und ein mit Zähnen ausgestattetes Sperrrad (15), die drehgekoppelt sind, wobei die Schnecke (17) mit der Zahnung so in Eingriff steht, dass die Rampenmittel (12) betätigt werden;
∘ eine am Deckel (5) befestigte Sperrklinke (29), die eine Steuerzunge (30) aufweist, die mit den Zähnen des Sperrrades (15) so zusammenwirkt, dass im Verschleißfall das Sperrrad (15) in eine Drehrichtung drehangetrieben wird und die Drehung des Sperrrades (15) in die entgegengesetzte Drehrichtung verhindert wird, wobei die Sperrklinke (29) so eingerichtet ist, dass das Kraftübertragungselement (9) die Steuerzunge (30) bei einem Einrückvorgang in Richtung des Sperrrades (15) drückt und dass die Steuerzunge (30) sich bei einem Ausrückvorgang vom Sperrrad (15) entfernt bis zu einer Endstellung, in der die Sperrklinke (29) am Deckel (5) anliegt,
wobei das Kupplungssystem **dadurch gekennzeichnet ist, dass** die Sperrklinke (29) in ihrer Endstellung zum Sperrrad hin (15) gepresst wird, so dass eine Rückstellgegenkraft bereitgestellt wird, die geeignet ist, die Sperrklinke (29) hin zu ihrer Endstellung zurückzustellen, und dass die Sperrklinke (29) einen sich radial entlang der Innenseite des Bodens (6) des Deckels (5) erstreckenden Körper, eine sich axial erstreckende Steuerzunge (30) und einen gebogenen Abschnitt zwischen dem Körper und der Steuerzunge (30) aufweist, wobei der gebogene Abschnitt mit einer Öffnung (32) versehen ist, die das Durchtreten eines radialen Fortsatzes (36) ermöglicht, der am Umfang des Kraftübertragungselements (9) gebildet ist, so dass das Kraftübertragungselement (9) mit der Steuerzunge (30) der Sperrklinke (29) zusammenwirkt.

2. Kupplungssystem nach Anspruch 1, **dadurch gekennzeichnet, dass** die Sperrklinke dazu eingerichtet ist, in ihrer Endstellung eine Rückstellkraft von 10 N oder mehr bereitzustellen.

3. Kupplungssystem nach Anspruch 1, **dadurch gekennzeichnet, dass** die Sperrklinke dazu eingerichtet ist, in ihrer Endstellung eine Rückstellkraft zwischen 15 und 25 N bereitzustellen.

4. Kupplungssystem nach einem der Ansprüche 1 bis 3, **dadurch gekennzeichnet, dass** die Durchtrittsöffnung (32) für den radialen Fortsatz (36) einen gerundeten radial inneren Rand (37) aufweist.

5. Kupplungssystem nach Anspruch 4 oder einem der Ansprüche 1 bis 3, **dadurch gekennzeichnet, dass** der radial äußere Teil des Körpers der Sperrklinke (29) und die Steuerzunge (30) direkt unter einer im Boden (6) des Deckels (5) ausgebildeten Öffnung (32) sind.

6. Kupplungssystem nach Anspruch 5, **dadurch gekennzeichnet, dass** die Sperrklinke (209) beidseits der Steuerzunge Querarme (33, 34) beinhaltet, die geeignet sind, an die radialen Ränder (35) der Öffnung (32) anzustoßen, und die Endstellung der Sperrklinke (29) definieren.

7. Kraftfahrzeug, **dadurch gekennzeichnet, dass** es mit einem Kupplungssystem nach einem der vorhergehenden Ansprüche ausgestattet ist.

## Claims

1. Clutch system for a motor vehicle comprising at least:
- a reaction plate intended to be coupled in rotation to a drive shaft;
- a friction disk (2) bearing friction linings (4) and intended to be coupled in rotation with a driven shaft;
- a cover (5) fixed onto the reaction plate;
- a pressure plate (1), secured in rotation to the cover (5), axially mobile relative to said cover (5) and having a working face facing the friction linings (4);
- a force transmission element (9) that can be controlled by a clutch release bearing and supported, on the one hand, relative to the cover (5) and, on the other hand, relative to the pressure plate (1) via a brace (13), in order to axially displace said pressure plate (1) relative to said cover to clamp the friction disk (2) between the pressure plate (1) and the reaction plate, in clutched position, or release it, in declutched position;
- a wear adjustment device that makes it possible to modify the axial distance d between the working face of the pressure plate (1) and the brace (13) via which the force transmission element (9) acts on the pressure plate (1), as a function of the wear of the friction linings (4), said wear adjustment device comprising:
∘ ramp means (12) cooperating with counter-ramp means to modify said axial distance d, said ramp means (12) bearing teeth (14);
∘ a worm screw (17) and a ratchet wheel (15) equipped with teeth coupled in rotation, said worm screw (17) meshing with the teeth so as to actuate said ramp means (12);
∘ a pawl (29) fixed to said cover (5), having a control tongue (30) cooperating with the teeth of the ratchet wheel (15) so as to drive the ratchet wheel (15) in a direction or rotation, in case of wear, and to prevent the rotation of the ratchet wheel (15) in the counter direction of rotation, said pawl (29) being arranged in such a way that the force transmission element (9) pushes the control tongue (30) towards the ratchet wheel (15) during a clutch operation and that the control tongue (30) moves away from the ratchet wheel (15) to a position of abutment in which the pawl (29) is braced against the cover (5), during a declutching operation,
said clutch system being **characterized in that** the pawl (29) is, in its position of abutment, constrained towards the ratchet wheel (15) so as to supply a counter return force capable of elastically returning the pawl (29) to its position of abutment and **in that** the pawl (29) has a body extending radially along the inner face of the bottom (6) of the cover (5), a control tongue (30) extending axially and a bent portion between the body and the control tongue (30), said bent portion being provided with an orifice (32) allowing the passage of a radial appendage (36) formed at the periphery of the force transmission element (9) so that said force transmission element (9) cooperates with the control tongue (30) of the pawl (29) .

2. Clutch system according to Claim 1, **characterized in that** the pawl is arranged to supply, in its position of abutment, a return force greater than or equal to 10 N.

3. Clutch system according to Claim 1, **characterized in that** the pawl is arranged to supply, in its position of abutment, a return force of between 15 and 25 N.

4. Clutch system according to any one of Claims 1 to 3, **characterized in that** the orifice (32) for passage of the radial appendage (36) has a radially inner edge (37) of rounded form.

5. Clutch system according to Claim 4 or any one of Claims 1 to 3, **characterized in that** the part radially towards the outside of the body of the pawl (29) and the control tongue (30) are directly in line with an aperture (32) formed in the bottom (6) of the cover (5) .

6. Clutch system according to Claim 5, **characterized in that** the pawl (209) comprises, on either side of the control tongue, transverse arms (33, 34) adapted to come into abutment against the radial edges (35) of the aperture (32) and defining the position of abutment of the pawl (29).

7. Motor vehicle, **characterized in that** it is equipped with a clutch system according to any one of the preceding claims.
